Europäisches Patentamt

European Patent Office

Office européen des brevets

(11) Publication number: **0 162 498**

A1

# EUROPEAN PATENT APPLICATION

(21) Application number: 85200596.6

(22) Date of filing: 17.04.85

(51) Int. Cl.⁴: **A 23 C 19/05**
**A 23 J 1/20**

(30) Priority: 26.04.84 NL 8401342

(43) Date of publication of application:
27.11.85 Bulletin 85/48

(84) Designated Contracting States:
DE FR GB NL

(71) Applicant: STICHTING NEDERLANDS INSTITUUT VOOR
ZUIVELONDERZOEK
Kernhemseweg 2 P.O.Box 20
NL-6710 BA Ede(NL)

(72) Inventor: Ottenhof, Henricus Arnoldus W. E. M.
3 Himalaya Crescent
Khandalla Wellington(NZ)

(74) Representative: van der Beek, George Frans et al,
Nederlandsch Octrooibureau Johan de Wittlaan 15 P.O.
Box 29720
NL-2502 LS 's-Gravenhage(NL)

(54) Process for preparing a product containing casein and whey protein, which is suitable as a foodstuff or for processing in foodstuffs.

(57) A process for the preparation of a product containing casein and whey, which comprises adjusting the pH of a milk product containing casein and whey protein to a value above 6.8 and preferably of at least 7.0, subjecting the material so obtained to a heat treatment whereby the whey protein denatures, allowing a milk-clotting enzyme to act on the milk product after adjustment of the pH to a value above 6.8 and before or after said heat treatment, and acidifying the resulting product, after cooling to a temperature below 65°C, to a maximum pH of 6.3. The product obtained is suitable as a foodstuff or for processing in foodstuffs.

EP 0 162 498 A1

Croydon Printing Company Ltd.

## Process for preparing a product containing casein and whey protein which is suitable as a foodstuff or for processing in foodstufts

The invention relates to a process for preparing a product containing casein and whey protein, which is suitable as a foodstuff or for processing in foodstuffs from a milk product containing casein and whey protein which comprises adjusting the pH of the milk product to a value above 6.8, subjecting the material so obtained to a heat treatment at a temperature and for a time which are at least adequate to denature the whey protein, and subsequently cooling it to a temperature below 65°C and then acidifying it.

Such a process has been described in the not previously published European Patent Application 83201707.3. In this prior method, by acidifying to a pH below 5.4, a precipitate is obtained which is extremely soluble in water at neutral pH and has a low calcium content and a low ash content. It is not a co-precipitate in the sense of a complex of casein and whey protein.

It has been found that a product very suitable as a foodstuff or for processing in foodstuffs can be obtained if, in the process described above, after adjusting the pH to a value above 6.8 and before or after the heat treatment by which denaturation of the whey protein takes place, a milk-clotting enzyme is allowed to act on the milk product and after cooling to below 65°C the latter is acidified to a maximum pH of 6.3.

After the acidification, a precipitate suspended in a liquid is obtained which can also be described as a curd in a serum. The product obtained can be used for a very wide range of applications and offers advantages over using products described previously or known.

It is per se surprising that addition of milk-clotting enzymes to a product whose pH is above 6.8 has a favourable effect. It is known, for example, from the book by Pieter Walstra and Robert Jenness entitled "Dairy Chemistry and Physics" (John Wiley & Sons, New York, 1984), pages 238, 240 and 245 that the known milk-clotting enzyme chymosin is virtually inactive above a pH of 6.7 and that milk which has been subjected to a severe thermal treat-

2

ment can only be made to clot slowly or not at all. It was therefore not the obvious thing to do to add milk-clotting enzymes to a milk product with a pH above 6.8 and certainly not to a milk product which had in addition been heated to a high temperature.

The milk product to be used as the starting material is generally skim milk or buttermilk which, if desired, may be enriched with natural whey protein. In practice the starting material is often skim milk which has been pasteurised, for example at 68 to 72°C for 5 to 20 seconds. The pH of the starting material is usually around 6.7. For the method according to the invention it should be raised to above 6.8 and preferably to at least 7.0. The upper limit of the pH range to be used is not critical. At a pH above 8.0, however, formation of undesirable compounds often occurs and the taste of the product finally obtained is adversely affected. In addition, it is to be expected that at a pH of 8 or more the activity of milkclotting enzyme is adversely affected. By preference the pH of the milk product used as starting material is brought to a value in the range 7.0 to 7.5. To adjust the pH a basic compound or an ion exchanger can be used. By preference a sodium hydroxide solution is used because sodium hydroxide is generally available and cheap.

After the pH has been adjusted to a value above 6.8 and preferably of at least 7.0, the material obtained is heated in a manner such that the whey protein present denatures. Heating for 5 to 20 minutes at 80 to 100°C is suitable; by preference the heating is done for 8 to 12 minutes at 90 to 98°C. "Ultra-high temperature" (UHT) treatment is also possible such as heating at 130°C for 60 seconds or heating at 145°C for 5 seconds, or a temperature-time combination inbetween.

After heating, the product is cooled to a temperature below 65°c. If it is cooled to a higher temperature the solubility of the protein is found to be adversely affected. From practical consideration cooling is usually done to a temperature in the range from 4 to 45°C.

After cooling to a temperature below 65°C the product obtained is acidified to a pH of 6.3 or lower. At a pH above 6.3 a good gel-like or flocculated precipitate is not obtained. The intended application of the product to be prepared determines the pH which must be reached during acidification. The lower limit of the pH range to be achieved is around 4.2 because at a pH below 4.2 the casein goes back into solution. The acidification can take place by means of an acid acceptable in the preparation of foodstuffs, for example a mineral acid or an organic acid such as lactic acid or gluco-$\delta$-lactone, but also by means of cultures of micro-organisms which then frequently make a positive contribution to the taste of the finished product.

The point in time at which the milk-clotting enzyme is allowed to act on the milk product to be used as the starting material is not of importance provided the pH value of the starting material has first been brought to a value above 6.8. The fact is that if the enzyme is allowed to act before the pH is increased and then the remaining steps in the method are applied, the yield is found to be considerably reduced (see the comparative example III below).

Naturally, the milk-clotting enzyme should be allowed to act before the pH is again reduced to 6.3 or lower.

The temperature at which the milk-clotting enzyme is allowed to act can vary within wide limits. In general it is in the range from 2°C to 40°C. The action of the milk-clotting enzyme can, for example, be allowed to take place for a long time, for example 10 to 25 hours, at 4°C, but one can also maintain the temperature in a range of from 20 to 35°C which is usual in the manufacture of cheese. This means, therefore, that if the milk-clotting enzyme acts after the heating process in which denaturation of the whey protein takes place, the temperature must first be brought to a value suitable for this action.

Milk-clotting enzymes are enzymes which by preference or almost exclusively split the phenylalanine-methionine bond in kappa-casein. During this splitting the soluble glycomacropeptide is produced on the one hand and on the other hand para-casein which readily flocculates under the influence of calcium.

In the method according to the invention all milk-clotting enzymes can be used in principle. These are enzymes of animal origin or vegetable origin and enzymes of bacteria and of fungi. An example of an enzyme of animal origin is rennet which primarily contains chymosin as the active enzyme. Reference is made to the book by H. Lolkema and J. Blaauw entitled "Kaasbereiding" (1974), pages 94 and 95. For the quality of the product it is of importance that the enzyme used is very specific and exhibits little general proteolysis. Excessive general proteolysis can lead to a modification of the product as a result of which, for example, a bitter taste may be produced.

The time for which the milk-clotting enzyme acts is, among other things, dependent on the milk product used as starting material, on the enzyme used and on the temperature, and can be determined for each individual case by simple tests.

The intended application of the product prepared according to the invention determines, among other things, the degree of acidification. With acidification to a pH of, for example, 5.4 or lower, a precipitate is obtained which has a low ash content, a low calcium content and a good protein solubility. The pH value is determined by the requirements imposed on the precipitate obtained (also designated curd). At a pH of 5.3 soft curd is obtained, which still has a relatively high calcium content. At a lower pH the calcium content of the curd also becomes lower, while the actual curd grains become firmer. As already noted, acidification should not go below a pH of 4.2. By preference acidification is done to a pH in the range from 4.4 to 4.7.

The curd can be separated in a known manner, for example by means of decanting or centrifuging or by means of sieving or gauze filtering. It is preferable to heat the milk product before the curd is separated. The heating produces syneresis and the curd grains become firmer. The heating can be done, for example, by means of direct steam injection of by indirect heating. The heating temperature is to some degree dependent on the manner in which the curd has been acidified. After acidification with mineral acid a temperature between 40° and 50°C, for example approximately 45°C is to be preferred, whereas after acidification following a bacteriological path a temperature between 55°C and 70°C, for example, approximately 60°C is usually used.

It is preferable to wash the precipitate obtained and separated in the manner described above thoroughly with an aqueous

0162498

liquid having a pH in the range 4.2 to 5.4 and by preference 4.4 to 4.7 in order to obtain as pure a precipitate as possible.

The precipitate prepared according to the invention, which in general contains 35 to 50 weight % dry material, can be re-dissolved in water at a pH between 6.5 and 8.0. Various methods are known for dissolving casein which can also be applied here. By way of example reference is made to the method according to Dutch Patent Application 80.04587. In this method water-insoluble milk proteins containing casein are fed in a continuous current through a closed reaction chamber along with solubilising agents, for example sodium hydroxide, and water by means of a volume pump and in this reaction chamber the mixture is converted under the influence of shearing forces into a solution with a dry materials content in the range of from 20 to 70 weight %. In this process it is advantageous to mix the milk proteins with an alkaline solubilising agent before the reaction chamber is reached until a pH of 5.0 to 5.3 is obtained, and then to add enough alkaline solubilising agent in the reaction chamber to give the mixture a pH of at least 6.5.

Starting from skim milk a product obtained according to the invention by acidification to a pH of 4.5, washing of the precipitate obtained at a pH of 4.6, dissolving and drying has for example an ash content below 4 weight %, a calcium content below 0.1 weight % and a good protein solubility. A 10-weight % solution of the dried product gels even when the calcium content in the solution is 0.6 weight %. A solution of 10 weight % of the precipitate as obtained according to European Patent Application 83201707.3 also has a good protein solubility, a low ash content and a low calcium content, but will only gel at a calcium content in the solution of greater than 1.2 weight %. A comparison is provided by the fact that a 10-weight % solution of sodium caseinate still does not exhibit any gel formation when the calcium content in the solution is 2.4 weight % or more. For applications in meat products, however, gel formation at a low calcium content is very advantageous. The fact is that the presence of calcium in meat products leads to the expulsion of moisture when they are being processed. If a solution of a precipitate prepared as above according to the invention is then added to meat products, it quite quickly

**0162498**

forms a gel, which prevents the expulsion of moisture from the meat products, with the calcium present in the meat products during pasteurisation. The products prepared according to the invention are, therefore, not intended to replace animal protein, but to improve the structure of meat products.

Precipitates prepared according to the invention are also extremely suitable for processing in dessert products.

If the method according to the invention is to be used in the production of cheese, the procedure is, for example, as follows. The pH of the milk product which contains casein and whey protein is adjusted to a value between 6.8 and 8.0, for example to 7.5. It is then heated, for example, for 15 minutes to 95°C. It is then cooled to a temperature usual for cheese manufacture, for example 30 to 32°C. Rennet is then added and the whole is allowed to stand at a temperature of 30 to 32°C for half an hour. As a result of the high pH clotting does not occur. A bacteriological starter concentrate is then added. At a pH of around 6.3 a clotting effect begins to become perceptible. If the calcium content in the milk is high, a clotting effect may even be observed at a pH of 6.6 to 6.7. The curd obtained is then processed further in the manner usual in the manufacture of cheese. The cheese obtained contains a considerable quantity of whey protein. In the method according to the invention the starter can also be added together with the rennet, but only if the rennet is added after the heating process in which denaturation of the whey protein takes place.

The method according to the invention can also be used in the manufacture of cottage cheese. In the manufacture of cottage cheese one usually starts from pasteurised skim milk which is brought to a temperature of 22 to 26°C or even of 31°C, after which about 3 g of starter and 0.2-0.3 ml of rennet are added per 100 l of skim milk. The curd is separated after acidifying for 16 hours, subsequently cutting at a pH of 4.6 to 4.7 and heating to a temperature of 48 to 55°C for 60 minutes. The curd is washed 2 or 3 times, after which the desired finished product is obtained by adding pasteurised cream and salt. In the method according to the invention, the pH of the skim milk is first brought to a value above 6.8, the skim milk is thereafter heated to a temperature at which the whey protein denatures, is cooled to a temperature of 22 to 26°C or even of 31°C, after which starter and rennet are added. The rennet can of course also have been allowed to act even before the heating process.

In the case of cottage cheese obtained according to the known methods the whey proteins present are present in the natural state insofar as they have not been removed and lost from the whey in the separation of the curd, whereas cottage cheese manufactured according to the invention contains a large quantity of whey protein. This cottage cheese does not have a bitter taste.

The method according to the invention can also be used in the preparation of quarg. In the conventional manufacture of quarg skim milk is pasteurised, then cooled to a temperature in the range 20 to 28°C or 30 to 32°C, 2-6 g of starter and 0.2-2 ml of rennet per 100 litres of skim milk are added, further acidification is allowed to take place for, for example, 14 to 18 hours, the curd obtained is cut and the curd is separated. In this process the whey protein present in the natural state disappears to a large extent in the whey. To overcome this disadvantage C. Güngerich has suggested in "Deutsche Molkerei-Zeitung" 102 (1981), pages 388-392, to heat the quarg whey obtained after separating the curd to a temperature of 52 to 55°C, followed by ultrafiltration and cooling the concentrate. The whey proteins obtained in this way are mixed with the precipitate obtained in separating the curd which mainly consists of casein. As a result of the fact that in using the method according to the invention the skim milk is first brought to a pH above 6.8 and then heated to denature the whey proteins, subsequently cooled to a temperature in the range 20 to 28°C or 30 tot 32°C, subsequently starter and rennet are added and then the usual method is followed, a quarg product is obtained which contains a considerable amount of whey protein. There is no question of a bitter taste to the quarg.

According to the Journal of the Society of Dairy Technology, 36, No. 4 (October 1983), pages 107-108, in the manufacture of so-called Thermoquarg untreated skim milk is heated for 2-4 minutes at 95-98°C before the starter is added in order to retain whey proteins, which are otherwise lost, in the curd. After coagulation the curd is held for three minutes at 60°C to denature the whey proteins further. In this process 30-60 % of the whey proteins are included in the quarg. It is reported that denaturation which goes still further results in the quarg having a bitter taste. In using the method according to the invention, however, all the whey proteins from the skim milk are included in the quarg in denatured from without the latter acquiring a bitter taste. From the last-named literature reference the method is also known of denaturing the whey proteins which are present in the whey which is obtained in the known methods for the manufacture of quarg and adding the denatured proteins to a subsequent batch of skim milk which is used for the manufacture of quarg or to make a whey protein quarg from it.

The following examples explain the invention in more detail. In them the protein solubility is determined according to the AOCS official method BA 11-65, Nitrogen Solubility Index (NSI), in which, however, centrifuging was done at 20,000 g. The ash content given in the examples was determined according to IDF Standard 89:1979.

## Example I

In a tank the pH of skim milk at a temperature of 4°C was brought to 7.5 by means of a 4N sodium hydroxide solution. Subse-quently the skim milk was pumped at a rate of 1500 litres per hour through pasteurising equipment and heated to 68°C, after which the temperature of the skim milk was increased to 95°C by direct steam injection.

The heated skim milk was kept at 95°C for 15 minutes in a so-called continuous heater. Part of the skim milk was then cooled to 4°C (batch I) while the other part of the skim milk was cooled to 30°C (batch II). To both batches of skim milk 30 ml of rennet were added per 100 litres of skim milk. Batch I was kept for 20 hours at 4°C and then heated to 25°C by means of a heat exchanger. To the batch I treated in this manner 4N hydrochloric acid was added until the pH was 4.5, after which the temperature was raised to 45°C by direct steam injection.

The curd formed was separated by means of a Westfalia decanting apparatus, model SDA 230.

0162498

Batch II was kept for 30 minutes in a continuous heater at 30°C. The pH was then reduced to 4.5 by adding 4N hydrochloric acid, after which the temperature of the batch was raised by direct steam injection to 45°C. The curd formed was also removed in this case with a Westfalia decanting apparatus, model SDA 230.

In both batch I and batch II the quantity of protein separated was found to be 93 to 94 weight % of the quantity of protein originally present in the skim milk.

Both curds were washed with water in a manner usual in casein preparation, in this case at a pH of 4.6 and at a temperature of 40°C. The washed precipitate was thereafter dissolved in acordance with the method known from Dutch Patent Application 80.04587 by means of a 4N sodium hydroxide solution, after which the solution, which had a pH of 6.7, was dried by spray drying. The powders obtained had the following average composition:

- dry material content                95.5 weight %
- protein content                     90.2 weight %
- ash content                          3.9 weight %
- calcium content                   $<$ 0.1 weight %
- protein solubility                  90


Example II

A precipitate was prepared in a manner similar to that described in example I, but the following changes were made.

After the pH had been increased to 7.5, the rennet was added to the skim milk at 4°C, after which it was kept at this temperature for 16 hours. The skim milk was then heated at 95°C for 15 minutes and subsequently cooled to 30°C.

Before the serum was decanted, hydrochloric acid was injected until the pH was reduced to 4.5 and the temperature was brought to 45°C by direct steam injection. The precipitate obtained in this way was washed, dissolved and dried in the manner specified in example I.

The powder obtained had the following composition:

- dry material content                95.7 weight %
- protein content                     91.4 weight %
- ash content                          3.8 weight %

- calcium content       < 0.1 weight % 0162498
- protein solubility       90.

Example III (for comparison)

A precipitate was prepared in a manner similar to that described in example I, but with the following changes being made. The rennet was added to the untreated skim milk at 4°C and the skim milk was then kept at this temperature for 16 hours. The pH of the skim milk was then increased to 7.5, after which the temperature was brought to 95°C and kept at this value for 15 minutes. The skim milk thus treated was cooled to 30°C, the pH was subsequently brought to 4.6 and the temperature was then brought to 45°C by means of direct steam injection. After separating the curd by means of a decanting apparatus the protein yield was found to be considerably less than the yield obtained according to example I. Only 85 % weight % of the proteins originally present in the skim milk were found in the precipitate.

Example IV (for comparison)

Rennet casein was prepared in the traditional manner by adding, at 4°C, rennet to skim milk, which had been pasteurised for 15 seconds at 72°C, and keeping the temperature at 4°C for 20 hours, subsequently raising the temperature to 45°C and separating the curd by means of a decanting apparatus.

The curd obtained was washed at a neutral pH and dried in the manner usual for rennet casein.

The protein solubility of the product obtained was less than 5. The quantity of protein separated was 76 weight % of the quantity of proteins originally present in the skim milk.

Example V

A precipitate was prepared from skim milk in a manner similar to that described in example I, but with the following changes being made.

After raising the pH of the skim milk to 7.5, heating for 15 minutes at 95°C and cooling to 30°C, rennet and starter concentrate were added to the treated skim milk. The starter concentrate concentrate consisted of a mixture of <u>Streptococcus</u> <u>lactis</u> and <u>Strep</u>-
<u>tococcus</u> <u>cremoris</u>.

The acidification took place at 30°C for 10 hours until a pH
of 4.4 was reached. Before the serum was decanted, the temperature
was raised by means of direct steam injection to 60°C. The precipitate obtained, a quarg, was packed in small beakers and cooled.
This quarg had a refreshingly acid taste. The precipitate contained
91 to 92 weight % of the quantity of proteins originally present in
the skim milk.

## CLAIMS    0162498

1. A process for preparing a product containing casein and whey protein, which is suitable as a foodstuff or for processing in foodstuffs, from a milk product containing casein and whey protein which comprises adjusting the pH of the milk product to a value above 6.8, subjecting the material so obtained to a heat treatment and at a temperature for a time which are at least adequate to denature the whey protein, and subsequently cooling it to a temperature below 65°C and then acidifying it, characterised in that after adjustment of the pH to a value above 6.8 and before or after the heat treatment by which denaturing of the whey protein takes place, a milkclotting enzyme is allowed to act on the milk product and that after cooling to below 65°C, the latter is acidified to a maximum pH of 6.3.

2. Process according to claim 1, characterised in that the pH of the milk product is adjusted to a value of at least 7.0 and preferably in the range of from 7.0 to 7.5.

3. Process according to claims 1 and 2, characterised in that the pH of the milk product is adjusted with a basic compound or by means of an ion exchanger.

4. Process according to claim 3, characterised in that sodium hydroxide is used as the basic compound.

5. Process according to claims 1 to 4, characterised in that the material obtained after increasing the pH is heated for 5 to 20 minutes at 80 to 100°C.

6. Process according to claim 5, characterised in that the material obtained after increasing the pH is heated for 8 to 12 minutes at 90 to 98°C.

7. Process according to claims 1 to 4, characterised in that the material obtained after increasing the pH is heated using a temperature-time combination in the range from 130°C for 60 seconds to 145°C for 5 seconds.

8. Process according to claims 1 to 7, characterised in that the material is cooled after heating to a temperature in the range 4 to 45°C.

9. Process according to claims 1-8, <u>characterised in that</u> acidification is carried out to a pH below 5.4 but above 4.2 and the precipitate obtained in this way is washed and possibly dissolved and dried.

10. Process according to claim 9, <u>characterised in that</u> acidification is carried out to a pH in the range 4.4 to 4.7.

11. Process according to claims 9 and 10, <u>characterised in that</u> the precipitate obtained on acidifying is subjected to direct steam injection or indirect heating before separation.

12. Process according to claims 9 to 11, <u>characterised in that</u> the precipitate obtained is washed out with an aqueous liquid having a pH in the range 4.2 to 5.4

13. Process according to claim 12, <u>characterised in that</u> the precipitate is washed out with an aqueous liquid having a pH in the range 4.4 to 4.7.

14. Process according to claims 1-8, <u>characterised in that</u> after cooling to a temperature in the range between 30 and 32°C an acid which is acceptable for the purpose of preparing foodstuffs or a starter is added and a cheese product is prepared in a per se conventional manner.

15. Process according to claims 1-8, <u>characterised in that</u> after cooling to a temperature in the range between 20 and 32°C an acid which is acceptable for the purpose of preparing foodstuffs or a starter is added and a cottage cheese product is prepared in a per se conventional manner.

16. Process according to claims 1-8, <u>characterised in that</u> after cooling to a temperature in the range between 30 and 32°C an acid which is acceptable for the purpose of preparing foodstuffs or a starter is added and a quarg product is prepared in a per se conventional manner.

17. A product suitable as a foodstuff or for processing in foodstuffs prepared according to one or more of the preceding claims.

*******

## European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 297 451  (I. EGGEN)<br><br>* Claims 1-6; column 4, line 64 - column 5, line 27 * | 1,2,7-9,14-17 | A 23 C  19/05<br>A 23 J   1/20 |
| Y | | 3-6,10-12 | |
| Y | EP-A-0 069 014  (CENTRALE LAITIERE DE HAUTE NORMANDIE)<br>* Claims 1-7; examples 1,3 * | 1,6,9,10,11 | |
| Y | FR-A-1 320 383  (NATIONAL DAIRY PRODUCTS CO.)<br><br>* Abstract, points 1,2; examples 1,2 * | 1,7,8-12,14-17 | |
| | | | TECHNICAL FIELDS SEARCHED (Int. Cl.4) |
| Y | US-A-4 169 160  (W. WINGERD)<br><br>* Claims 1-4; column 2, line 46 - column 4, line 25 * | 1,5,7-10 | A 23 C<br>A 23 J |
| Y | | 2 | |
| A | US-A-2 714 068  (F. BERNHART)<br>* Column 4, lines 9-30 * | 1 | |

-/-

The present search report has been drawn up for all claims

| Place of search | Date of completion of the search | Examiner |
|---|---|---|
| THE HAGUE | 02-08-1985 | DESMEDT G.R.A. |

European Patent
Office

EUROPEAN SEARCH REPORT

**0162498**
Application number

EP 85 20 0596

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| Y | US-A-3 218 173 (M. LOEWENSTEIN)<br>* Example 1 * | 1,3,4 | |
| A | | 2 | |
| | ----- | | |

**TECHNICAL FIELDS SEARCHED (Int. Cl.4)**

The present search report has been drawn up for all claims

| Place of search<br>THE HAGUE | Date of completion of the search<br>02-08-1985 | Examiner<br>DESMEDT G.R.A. |
|---|---|---|